# FASCICULE DE BREVET EUROPEEN

(11) **EP 0 879 797 B1**
(45) Date de publication et mention de la délivrance du brevet: **25.10.2006**
(21) Numéro de dépôt: 98401146.0
(22) Date de dépôt: 14.05.1998
(51) Int. Cl.: C03B 23/025, F24C 3/08

(54) **Procédé de fabrication d'une plaque vitrocéramique**
Verfahren zur Herstellung einer glaskeramischen Scheibe
Method for making a glass-ceramic plate

(30) Priorité: 20.05.1997 FR 9706114
(43) Date de publication de la demande: 25.11.1998
(73) Titulaire: Eurokera S.N.C., 02405 Chateau-Thierry Cedex (FR)
(72) Inventeur: Vilato, Pablo, 75014 Paris (FR); Grassi, Michel, 77260 La Ferte-Sous-Jouarre (FR)
(74) Mandataire: Muller, René

(56) Documents cités:
- EP-A- 0 173 418
- EP-A- 0 715 125
- DE-A1- 4 333 334
- DE-C- 132 972
- US-A- 4 034 253

## Description

La présente invention est relative à une plaque vitrocéramique dans laquelle est ménagée au moins une ouverture notamment destinée à recevoir un brûleur à gaz atmosphérique.

Il est connu de l'état de la technique des tables de cuisson ou des cuisinières à gaz qui comportent des brûleurs à gaz fixés dans un bâti métallique tel qu'un cadre ou un boîtier.

Dans ce type de dispositif de cuisson, une plaque en verre, généralement trempée, en céramique ou en vitrocéramique, couvre la surface périphérique de chacun des brûleurs, comme décrit par exemple dans le document DE-A1-4 333 334.

Ce document divulgue aussi une plaque vitrocéramique avec au moins une ouverture étant au sommet d'une déformation locale de la plaque. En outre, il décrit d'une façon générale un procédé pour sa fabrication.

Pour ne pas avoir à forcer lors du montage et donc pour ne pas risquer de casser la plaque, chaque ouverture ménagée dans ladite plaque et prévue à cet effet est bien plus large que le diamètre du brûleur correspondant.

L'interstice circulaire important ainsi créé entre la plaque et le brûleur à gaz est recouvert d'une collerette circulaire métallique. Celle-ci assure une séparation mécanique qui permet d'éviter le contact direct entre la plaque et le brûleur en métal, un tel contact direct étant susceptible d'engendrer des fissurations dans la plaque nuisibles à sa résistance mécanique.

Si ce type d'installation de brûleur dans la plaque permet de diminuer le risque de formation de fissures dans la plaque, ce risque subsiste tout de même du fait du contact constituant la collerette avec la plaque. Par ailleurs, il présente un inconvénient non négligeable. En effet, dans ce type d'installation, l'étanchéité n'est pas bien assurée et des liquides pouvant par exemple déborder d'ustensiles de cuisson peuvent s'écouler entre la plaque et la collerette métallique.

Outre le fait que le nettoyage de ce type d'installation est difficile et nécessite souvent aussi un démontage, d'au moins une partie du dispositif, l'introduction de liquide sous la plaque peut être dangereuse, notamment lorsqu'il y a un ou plusieurs appareillages électriques, par exemple dans la configuration où le dispositif de cuisson est mixte et comporte des éléments chauffants tels que des éléments radiant ou halogène.

Des améliorations ont déjà été proposées.

Il est ainsi connu du document EP 715 125 de réaliser un montage du brûleur à gaz dans l'ouverture correspondante de la plaque vitrocéramique en interposant entre eux une collerette métallique en forme d'oeillet qui chevauche le bord de l'ouverture et lui assure ainsi une protection mécanique. En outre, l'étanchéité est assurée au moyen d'une pièce en graphite en forme de couronne, positionnée à l'interface de la plaque et de la collerette métallique.

Si un tel système est satisfaisant pour ce qui est de la résistance mécanique et de l'étanchéité, il s'avère être complexe à monter et indémontable par l'utilisateur.

En outre, le nettoyage de la plaque ne peut être effectué de manière complète car le bord de l'ouverture est de fait recouvert.

Enfin, le prix de la collerette métallique est relativement élevé notamment du fait qu'elle est constituée d'une pluralité de pièces fabriquées par emboutissage, qu'elle fait en outre appel à une pluralité de joints ou intercalaires complémentaires, ce qui engendre un surcoût non négligeable pour l'ensemble du dispositif de cuisson.

Le but de l'invention est alors de remédier aux inconvénients précités et de proposer, pour un dispositif de cuisson et/ou de maintien en température du type décrit ci-dessus, une plaque vitrocéramique dans laquelle est ménagée au moins une ouverture notamment destinée à recevoir un brûleur à gaz atmosphérique dont la protection mécanique de l'ouverture est totalement garantie tout en assurant une étanchéité parfaite aux liquides au niveau de l'ouverture, sans que cela se fasse au détriment des facilités de nettoyage du dispositif.

Ce but est atteint grâce au procédé défini en revendication 1, au moins une partie du bord de l'ouverture de la plaque obtenue étant façonnée et l'ouverture étant au sommet d'une déformation locale de la plaque.

Dans le contexte de l'invention, l'expression « l'ouverture est au sommet d'une déformation locale de la plaque » signifie que le plan défini par l'ouverture est en élévation par rapport au plan principal de la plaque et avantageusement parallèle.

La plaque ainsi obtenue satisfait au problème posé d'une manière simple et peu onéreuse.

En effet, d'une part le fait qu'au moins une partie du bord de l'ouverture soit façonnée élimine tout risque de fragilisation mécanique. D'autre part, une fois la plaque installée, la pente autour de l'ouverture permet d'éviter l'infiltration des liquides sous la plaque, puisque ceux-ci s'écoulent vers le bas de la pente.

Enfin, le nettoyage de la plaque vitrocéramique est rendu possible jusqu'au bord de chaque ouverture.

Subsidiairement, le montage/démontage du brûleur à gaz est accessible à tout utilisateur, sans qu'il soit nécessaire pour lui d'avoir un outillage spécifique.

Selon un mode particulièrement avantageux de l'invention, la déformation locale présente une forme au moins partiellement tronconique.

Avantageusement, la déformation locale est telle que l'élévation de l'ouverture par rapport au plan principal de la plaque est d'au moins 2 mm, de préférence égale à 4 mm.

Selon une caractéristique de l'invention, le bord de l'ouverture est arrondi, ce qui accroît encore sa résistance mécanique.

L'ouverture de la plaque selon l'invention peut avoir un diamètre compris entre 4 cm et 10 cm de manière à être adapté à tous les types de brûleurs à gaz atmosphériques existants.

Dans la configuration où la plaque, mentionnée ci-dessus, présente une face lisse et une face picot, la pente descendante donnée par la déformation locale est avantageusement orientée de la face lisse vers la face picot.

D'une manière particulièrement avantageuse, la plaque est équipée d'un joint annulaire fibreux intercalé entre le brûleur à gaz atmosphérique et ladite plaque.

Dans le contexte de l'invention, il faut comprendre par « équipée de » le fait que le joint annulaire fibreux peut être soit rendu solidaire de la plaque par exemple au moyen d'un adhésif soit maintenu préssé contre la plaque par l'intermédiaire du brûleur dont l'épaulement vient en butée sur celle-ci.

Le rôle principal d'un tel joint est d'être un élément d'étanchéité aux liquides supplémentaire. Il assure également l'interface mécanique entre le brûleur à gaz atmosphérique et la plaque vitrocéramique en leur évitant ainsi d'être en contact direct. Cette interface mécanique et avantageuse pour les raisons suivantes:
- d'une part, elle évite tout risque de rayure lors du montage du brûleur dans l'ouverture;
- d'autre part, elle joue le rôle d'amortisseur en cas de chocs mécaniques.

La plaque vitrocéramique proposée peut être utilisée dans un dispositif de cuisson mixte c'est-à-dire qui comprend au moins deux sources de chaleur différentes par transfert direct et indirect de celle-ci, par exemple au moins un brûleur à gaz atmosphérique et au moins un élément chauffant tel qu'un radiant, un halogène. Dans cette variante, la plaque comporte au moins une zone destinée à couvrir un élément chauffant tel qu'un élément radiant ou halogène.

L'invention vise ainsi notamment une plaque vitrocéramique dans laquelle est ménagée au moins une ouverture notamment destinée à recevoir un brûleur à gaz atmosphérique et issue du procédé de fabrication d'une telle plaque selon l'invention dans lequel on effectue un cycle de céramisation d'une plaque de verre sur un support de formage.

Selon l'invention, on réalise une élévation du bord de ladite ouverture par rapport à l'une des faces de la plaque, lors du cycle de céramisation de la plaque de verre. A l'échelle industrielle, le procédé selon l'invention est particulièrement avantageux pour obtenir une plaque vitrocéramique répondant au but fixé par l'invention. En effet, le procédé tel que décrit ci-dessus ne nécessite pas de difficulté de mise en oeuvre particulière car réalisé directement à partir d'un cycle de céramisation, connu en soi, sans qu'aucun outillage élaboré ne soit nécessaire. En d'autres termes, il est peu onéreux et donc le surcoût engendré au niveau de l'ensemble du dispositif de cuisson pour lequel la plaque est destinée est négligeable.

On réalise l'élèvation au moyen d'un élément sensiblement cylindrique positionné sur le support de formage et dont le diamètre est supérieur au diamètre de l'ouverture. Cet élément cylindrique peut être creux ou plein tel qu'un galet. Il est choisi en un matériau céramique ou un acier réfractaire.

Ainsi, lors du cycle de céramisation, la plaque s'affaisse sous son propre poids sauf à l'endroit où elle est maintenue par l'élément cylindrique sans que l'on ait besoin de se servir d'un outillage spécifique.

Cette manière de procéder selon l'invention est loin d'avoir été évidente pour l'homme de l'art. Celui-ci aurait pu craindre en effet qu'en réalisant un affaissement ainsi la majeure partie de la plaque, ses propriétés notamment sa planéité ne soient pas conservées.

De préférence, la hauteur de l'élément cylindrique est égale à au moins 2 mm, de préférence 4 mm. De préférence encore, la différence entre le diamètre du galet et le diamètre de l'ouverture est d'au moins 5 mm, de préférence supérieure à 10 mm, avantageusement de l'ordre de 20 mm. Une différence trop faible aurait en effet tendance à donner une intersection d'arêtes vives au niveau de la déformation locale de la plaque susceptibles d'engendrer des fissures préjudiciables à la résistance mécanique de la plaque pouvant conduire à la casse de cette dernière.

Avant d'effectuer le cycle de céramisation, on effectue de manière avantageuse un façonnage d'au moins une partie du bord de l'ouverture.

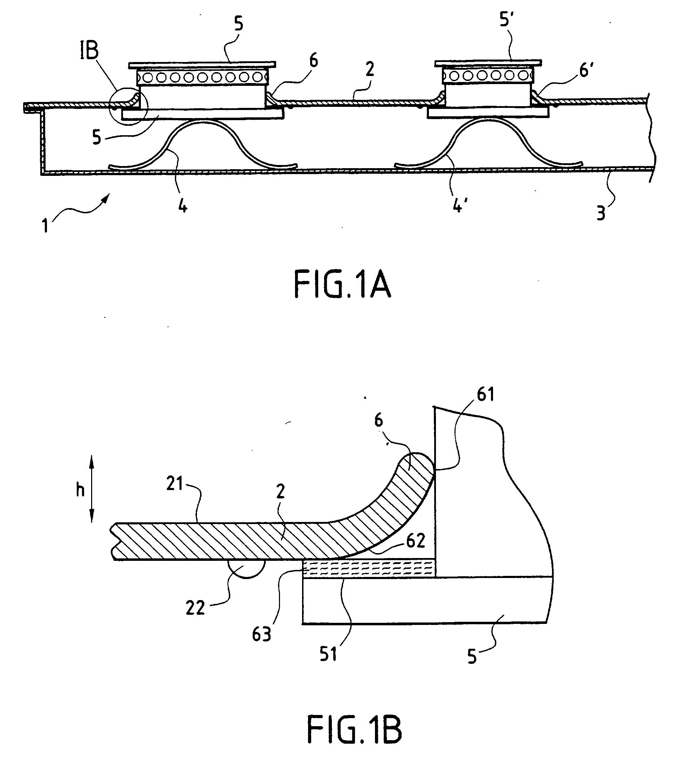

D'autres détails et caractéristiques avantageuses ressortent ci-après d'un exemple non limitatif d'une plaque vitrocéramique conforme à l'invention décrit en référence aux figures 1 a, 1 b et 2 qui représentent:
- Figure 1a: une vue en coupe partielle d'un dispositif de cuisson comprenant une plaque vitrocéramique connue ;
- Figure 1b: une vue de détail de la figure 1a;
- Figure 2: une vue en perspective illustrant une étape de fabrication d'une plaque vitrocéramique selon l'invention.

Par souci de clarté, les figures ne sont pas à l'échelle et les proportions relatives entre les différents éléments ne sont pas respectées.

La figure 1a est une vue en coupe d'un dispositif de cuisson 1 comprenant une plaque vitrocéramique 2 connue.

Le dispositif de cuisson 1 comporte un bâti métallique 3 au fond duquel sont fixés deux ressorts métalliques 4,4' qui supportent chacun un brûleur à gaz atmosphérique 5,5', les deux brûleurs à gaz 5,5' étant de diamètres différents l'un de l'autre.

Chacun des deux brûleurs à gaz atmosphériques 5,5' est monté respectivement dans une ouverture 6,6' ménagée dans la plaque 2.

Le montage du brûleur à gaz atmosphérique 5,5' dans l'ouverture correspondante 6,6' ménagée dans la plaque vitrocéramique 2 ainsi que les caractéristiques de l'ouverture seront expliqués ci-après en référence à la figure 1b.

L'amenée d'air nécessaire au fonctionnement des brûleurs à gaz est assurée par tout moyen connu de l'homme de l'art, notamment par une ou plusieurs ouvertures pratiquées dans le bâti métallique 3.

Sur la figure 1b, on a représenté une vue en détail de la figure 1a. Celle-ci montre la façon dont est agencée le brûleur à gaz 5 dans la plaque vitrocéramique 2 connue au niveau de son ouverture 6.

Cette ouverture 6 comporte un bord 61 façonné en arrondi qui est en élévation d'une hauteur h égale à 4 mm par rapport à la surface lisse 21 de la plaque vitrocéramique 2 et est au sommet d'une déformation locale en forme de « cratère », c'est à dire à l'arrondi du bord 61 près une forme tronconique dont la base 62 comporte une courbure concave.

Le brûleur à gaz 5, quant à lui, comporte un épaulement 51 en butée sur cette même base 62. Entre cet épaulement 51 et la base 62 se trouve intercalé un joint fibreux 63 de forme annulaire. Celui-ci est, de manière judicieuse, choisi en un matériau thermiquement isolant.

Il est à noter que, selon cette variante, la plaque vitrocéramique 2 a une face inférieure, c'est à dire celle tournée vers l'intérieur du bâti métallique 3, qui comporte des picots 22. Ces picots 22 permettent d'une part d'avoir une résistance mécanique de la face inférieure de la plaque 2 considérablement accrue, d'autre part d'éviter l'éblouissement d'une personne regardant la plaque 2 de dessus, ceci en diffractant la lumière émise par les éléments chauffants disposés sous celle-ci, autres que les brûleurs à gaz, tels que par exemple des éléments radiant.

L'ouverture 6 de la plaque vitrocéramique 2 ainsi décrite en référence aux figures 1a et 1b, est protégée de manière sûre contre les chocs mécaniques et est rendue étanche aux liquides susceptibles de s'infiltrer au travers d'elle. En outre, ainsi conçu, le dispositif de cuisson 1 répond parfaitement aux normes de sécurité telles que la norme NF EN 60335-2-6, relatives aux appareils de cuisson électrodomestiques.

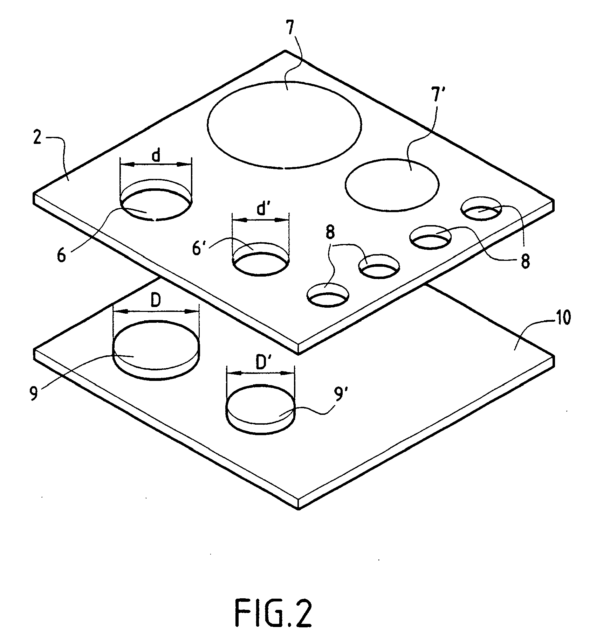

La figure 2 illustre une étape du procédé de fabrication d'une plaque vitrocéramique selon l'invention. Sur cette figure 2, on voit en perspective une vue éclatée d'une plaque de verre 2 parfaitement plane et d'un support de formage 10 sensiblement de mêmes dimensions.

La plaque de verre 2 comporte deux zones circulaires 7,7' dites de chauffe car destinées à recouvrir chacune un élément chauffant tel qu'un élément radiant ou halogène. Dans cette plaque de verre 2 sont ménagées quatre ouvertures 8 alignées et de diamètre identique dont la découpe a été effectuée de manière brute, c'est à dire sans traitement spécifique ultérieur à la découpe. Ces ouvertures 8 sont destinées à recevoir chacune l'axe du bouton de réglage permettant de réguler l'élément chauffant correspondant, une fois la plaque montée dans le dispositif de cuisson 1. Sont également ménagées deux autres ouvertures 6,6' de diamètre d, d' plus important dont le bord a été façonné, par exemple à l'aide d'une meule pour lui conférer la résistance mécanique adéquate. Ces ouvertures 6,6' sont destinées à recevoir chacune un brûleur à gaz atmosphérique.

Le support de formage 10, quant à lui, est surmonté de deux galets cylindriques 9,9' de hauteur identique égale à 4 mm et de diamètre D, D' tel que la différence entre D et d d'une part, et entre D'et d' d'autre part est de l'ordre de 20 mm. Il est préférable que ces galets 9,9' aient subi un traitement de surface spécifique de sorte qu'ils n'adhérent pas à la plaque 2 lors du cycle de céramisation. Le choix du matériau constituant ces galets est bien connu de l'homme de l'art et il peut par exemple consister en un matériau céramique ou un acier réfractaire.

Pour réaliser la plaque vitrocéramique décrite en référence aux figures 1a et 1b, on procède de la manière suivante:
On positionne la plaque de verre 2 sur le support de formage 10 de telle manière que les deux ouvertures 6,6' de diamètre respectif D, D' surmontent exactement les deux galets 9,9'de diamètre respectif d,d' en s'assurant d'un centrage quasi parfait de telle sort qu'ils soient concentriques.
Une fois ce centrage réalisé, on effectue de manière connue en soi un cycle de céramisation de la plaque de verre 2 pour la transformer en une plaque vitrocéramique. Au cours de ce cycle de céramisation, la plaque de verre se ramollit et s'affaisse sous son propre poids aux endroits où elle maintenue par les galets cylindriques, c'est à dire au niveau des ouvertures 6,6' de diamètre d, d', en se déformant du simple fait de la striction de matière. A la compaction près, l'épaisseur de la plaque reste constante autour de chacune des deux ouvertures.
On obtient ainsi une plaque vitrocéramique 2 dans laquelle sont ménagées deux ouvertures 6,6', chacune d'entre elles étant au sommet d'une déformation locale en forme de « cratère ».

L'invention a ainsi mis au point un procédé pour la fabrication d'une plaque vitrocéramique dans laquelle est ménagée une ou plusieurs ouvertures protégée(s) mécaniquement de manière efficace et étanche(s) aux liquides susceptibles de s'infiltrer au travers d'elle(s). Cette mise au point est d'autant plus satisfaisante qu'elle ne s'est pas faite au détriment des facilités de nettoyage des dispositifs de cuisson pour lesquels elle est destinée.

Bien que l'invention a été décrite pour une application spécifique, elle n'est pas pour autant limitée à une telle application. Par exemple, l'invention peut être mise en oeuvre de manière à ce qu'une ouverture de la plaque vitrocéramique destinée à recevoir l'axe d'un bouton de réglage d'un élément chauffant présente la déformation locale.

## Revendications

1. Procédé de fabrication d'une plaque vitrocéramique (2) dans laquelle est ménagée au moins une ouverture (6,6') notamment destinée à recevoir un brûleur à gaz atmosphérique (5,5'), dans lequel on effectue un cycle de céramisation d'une plaque de verre comportant au moins une ouverture sur un support de formage (10), **caractérisé en ce qu'**on réalise, lors du cycle de céramisation et de l'affaissement de la plaque sous son propre poids, une élévation de ladite ouverture (6) par rapport au plan principal de la plaque au moyen d'un élément (9,9') sensiblement cylindrique, positionné sur le support de formage et centré sous l'ouverture, et dont le diamètre est supérieur au diamètre de l'ouverture.

2. Procédé selon la revendication 1, **caractérisé en ce que** la hauteur de l'élément (9,9') est égale à au moins 2 mm, de préférence 4 mm.

3. Procédé selon la revendication 1 ou 2, **caractérisé en ce que** la différence entre le diamètre de l'élément (9,9') et le diamètre de l'ouverture est d'au moins 5 mm, de préférence supérieure à 10 mm, avantageusement de l'ordre de 20 mm.

4. Procédé selon la revendication 1 à 3, **caractérisé en ce qu'**avant d'effectuer le cycle de céramisation, on effectue un façonnage d'au moins une partie du bord de l'ouverture.

## Claims

1. Process for manufacturing a glass-ceramic plate (2) in which at least one opening (6, 6') is made, which is especially intended to house an atmospheric gas burner (5, 5'), in which process a glass plate comprising at least one opening on a forming support (10) undergoes a ceramification cycle, **characterized in that**, during the ceramification cycle and the slumping of the plate under its own weight, the said opening (6) is raised with respect to the main plane of the plate, by means of an approximately cylindrical element (9, 9'), placed on the forming support and centred under the opening, and, the diameter of which is greater than the diameter of the opening.

2. Process according to Claim 1, **characterized in that** the height of the element (9, 9') is equal to at least 2 mm, and preferably 4 mm.

3. Process according to Claim 1 or 2, **characterized in that** the difference between the diameter of the element (9, 9') and the diameter of the opening is at least 5 mm, preferably greater than 10 mm and advantageously about 20 mm.

4. Process according to Claims 1 to 3, **characterized in that** before carrying out the ceramification cycle, at least part of the edge of the opening is shaped.

## Patentansprüche

1. Verfahren zur Herstellung einer Glaskeramikplatte (2), in welcher mindestens eine Öffnung (6, 6') angebracht ist, die insbesondere vorgesehen ist, einen Gasbrenner (5, 5') aufzunehmen, in welchem ein Zyklus zur Keramisierung einer Glasplatte, die mindestens eine Öffnung enthält, auf einem Formgebungsträger (10) durchgeführt wird, **dadurch gekennzeichnet, dass** in diesem Zyklus zum Keramisieren und Absinkenlassen der Platte unter ihrem Eigengewicht eine Erhöhung der Öffnung (6) in Bezug auf die Hauptebene der Platte mittels eines im Wesentlichen zylindrischen Elements (9, 9'), das auf dem Formgebungsträger positioniert und unter der Öffnung zentriert ist und dessen Durchmesser größer als der Durchmesser der Öffnung ist, bewirkt wird.

2. Verfahren nach Anspruch 1, **dadurch gekennzeichnet, dass** die Höhe des Elements (9, 9') mindestens 2 mm und vorzugsweise 4 mm beträgt.

3. Verfahren nach Anspruch 1 oder 2, **dadurch gekennzeichnet, dass** die Differenz zwischen dem Durchmesser des Elements (9, 9') und dem Durchmesser der Öffnung mindestens 5 mm, vorzugsweise mehr als 10 mm, und vorteilhafterweise etwa 20 mm beträgt.

4. Verfahren nach Anspruch 1 bis 3, **dadurch gekennzeichnet, dass**, bevor der Keramisierungszyklus durchgeführt wird, ein Beschleifen mindestens eines Teils des Randes der Öffnung erfolgt.
